**Europäisches Patentamt**

**European Patent Office**

**Office européen des brevets**

(19)

(11) Publication number: **0 025 411**

**A1**

(12)

# EUROPEAN PATENT APPLICATION

(21) Application number: **80810270.1**

(22) Date of filing: **01.09.80**

(51) Int. Cl.³: **B 65 G 39/09**
**B 65 G 39/12**

(30) Priority: **06.09.79 ZA 794719**
**22.08.80 ZA 805212**

(43) Date of publication of application:
**18.03.81 Bulletin 81'11**

(84) Designated Contracting States:
**AT BE CH DE FR GB IT LI LU NL SE**

(71) Applicant: **Dorigo, Cesare**
**26 Second Street Boysens Reserve**
**Johannesburg Edenvale 1610(ZA)**

(72) Inventor: **Dorigo, Cesare**
**26 Second Street Boysens Reserve**
**Johannesburg Edenvale 1610(ZA)**

(74) Representative: **Baggiolini, Raimondo**
**Racheli & Fiammenghi Via San Gottardo 15**
**CH-6900 Lugano(CH)**

(54) Mounting means for a roller.

(57) The roller according the invention is suitable for use with an endless belt conveyor or the like.

Known rollers for conveyors are disadvantageous in that in the event of a roller or shaft being damaged, the entire roller must be replaced.

This can be a time consuming operation.

The roller (10) according to the invention is mounted between end supports providing bearing (16) comprising a shield (18) for each bearing. Each shield comprises a convex cup-shaped formation for engagement in a recess (20) in each roller end wall (22).

The cup-shaped formation defines an annular skirt (24) adapted to house a conventional roller bearing (16) coupled to the end support by way of a shaft (26).

A washer (28) is provided on the shaft (26) between the shaft (26) and a dust cover (30).

With this arrangement the roller may readily be removed when a damaged roller must be repaired.

Fig.1

30 28 26 16 24 18 22 20 10

Croydon Printing Company Ltd.

## TITLE MODIFIED
see front page

A  roller

This invention relates to a roller. The invention is more particularly, but not exclusively concerned with a roller suitable for use with an endless belt conveyor or the like.

Known rollers for conveyors, include those having a substantially cylindrical body provided with a central bore and a shaft in the bore, supported at its ends on a frame. This arrangement is disadvantageous in that in the event of a roller or shaft being damaged, the entire roller must be replaced. This can be a timeconsuming operation.

It is an object of the invention to provide a roller with which the above disadvantage of known arrangements is at least minimised.

According to the invention, a roller mounted between end supports providing bearings is characterised in a shield for each bearing, the shields and end walls of the roller providing relatively rotatable inter-engaging formations.

In a preferred form of the invention each shield comprises a substantially convex cup-shaped formation for engagement in a recess in each roller end wall, the cup-shaped formation defining an annular skirt adapted to house a conventional roller bearing coupled to the end support by way of a shaft.

It will, however, be understood that alternative arrangements
are possible. For example, each shield may comprise a substantially concave cup-shaped formation for engagement with
a substantially convex protrusion on each roller end wall.

A roller assembly incorporating a roller according to the
invention will generally include a substantially U-shaped
frame providing a horizontal web and a pair of arms extending upwardly in use. The end supports for the rollers are
suitably provided on the frame so as to define an assembly
in which one medially located horizontal roller extends between end supports secured to the web and each of a pair of
side-rollers are secured at their one end to the arms of the
frame and at their other end to end supports on the horizontal
web.

Further according to the invention each shaft is coupled
at its end remote from the vearinr to a removable link mounted on the end supports. The link may comprise a spigot in
the nature of a bracket provided with an aperture at its
one end for receiving the shaft, its end remote from the
aperture being adapted to be housed in a socket in the nature of a scabbard fast with the end supports.

Preferably the bracket is of substantially triangular
cross-sectional configuration, at least in its region
remote from the aperture, to improve the strength thereof.

It will be understood that the inter-engaging formations may
be covered by a layer of protective material such as rubber
or the like to reduce wear.

With this arrangement the roller may readily be removed
by way of the links on the end supports when a damaged roller must be repaired. Furthermore, if the roller itself has
not been damaged, the damaged component, such as the shield or the bearing, may readily be replaced.

The invention will now be described by way of illustration only with reference to the acconpanying drawings in which:

Figure 1    is an exploded diagrammatic representation of the relatively rotatable components of a roller according to the invention; and

Figure 2    is a diagrammatic front elevation of an assembled roller according to the invention,illustrating a portion of the support frame for the rollers.

Referring to the drawings,a roller 10 is mounted between end supports 12 and 14 providing bearings 16. Each bearing 16 is provided with a shield 18 comprising a substantially convex cup-shaped formation for engagement in a recess 20 in each roller end wall 22. The shields 18 and end walls 22 of the roller 10 provide relatively rotatable inter-engaging formations.

The cup-shaped formations define an annular skirt 24 adapted to house the roller bearings 16. The bearing 16 is coupled to the end support by way of a shaft 26, a washer 28 is provided on the shaft 26 between the shaft 26 and a dust cover 30 for protecting the relatively rotatable components of the roller assembly.

Each shaft 26 is coupled at its end remote from the bearing 16 to a removable spigot in the nature of a bracket 32 mounted on the end supports 12 and 14. The bracket 32 is provided with an aperture at its one end for receiving the shaft 26 and the end of the bracket 32 remote from the aperture is adapted to be housed in a socket in the nature of a scabbard 34 fast with the end supports 12 and 14.

- 4 -

The inter-engaging formations on the shields 18 and the end walls 22 of the roller may be covered by a layer of protective material such as rubber or the like to reduce wear.

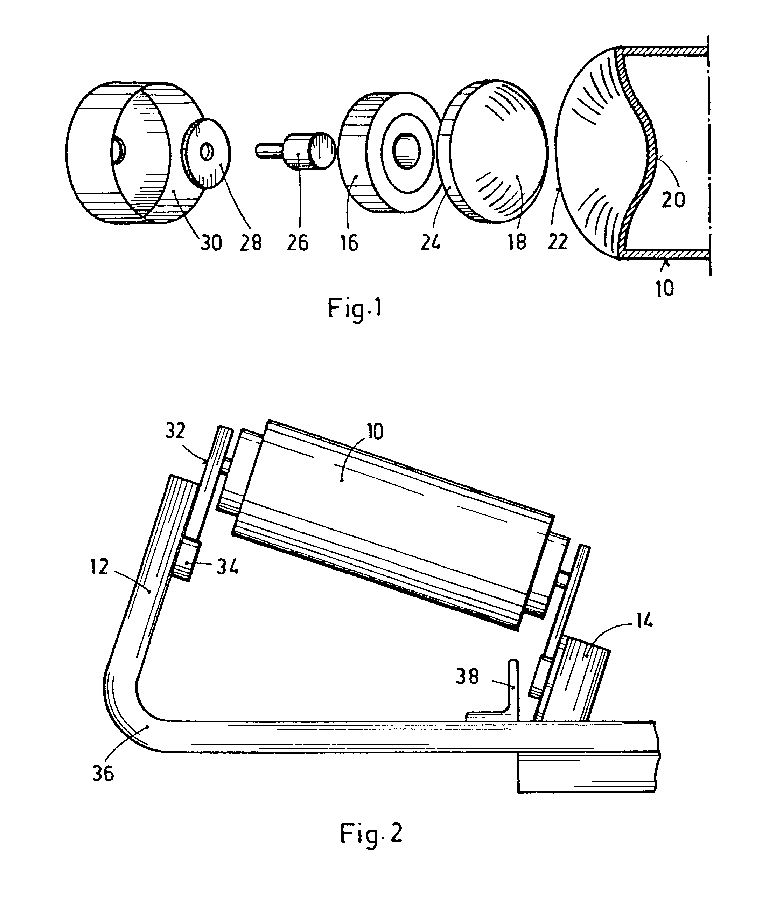

In the completed conveyor belt roller assembly, a portion of which is illustrated in Figure 2, a second horizontal roller will be attached to the support frame 36 by way of a second pair of end supports of which only one, designated 38, is illustrated. The pair of end supports 38 are spaced from the end supports 12 and 14 with respect to the longitudinal axis through a series of support frame structures 36. A third roller is provided in the completed roller assembly on each frame 36 in an in-line disposition relative to the roller illustrated in Figure 2, the support and third roller being in mirrorimage relationship with respect to the portion of the assembly illustrated in Figure 2. A series of such roller assemblies comprise the support for an endless belt conveyor.

With this arrangement the roller may readily be removed by way of the links on the end supports when a damaged roller must be repaired. Furthermore, if the roller itself has not been damaged, the damaged component such as the shield or the bearing, may readily be replaced.

Following variations are provided:

a) the engagement formation on the bearing shield is preferably in the form of a frusto-cone , and the mating formation at the ends of the roller are similarly profiled.

b) relative rotation between the bearing shield and roller is preferably prevented by means of protrusions on the shield which engage in mating recesses in the ends of the roller.

It will be appreciated that many others variations which
differ in matters of detail alone from that of the above
disclosure are possible.

- 1 -

0025411

Claims:

1. Mounting means for a roller, comprising a pair of spaced bearings each rotatably mounted on a support and a shield for each bearing, the shields being adapted to engage cooperating formations at the ends of the roller to mount the latter between the bearings.

2. The mounting means according to claim 1 wherein the shield be secured to the bearing substantially coaxially therewith in a manner substantially preventing relative rotation between the bearing and the shield.

3. The mounting means according to claim 1 or claim 2 wherein the shield is apress fit on the bearing.

4. The mounting means according to any one of claims 1 to 3 wherein each shield defines a substantially convex cup-shaped formation for engagement in recess formation defined in each end wall of the roller.

5. The mounting means according to claim 4 wherein the cup-shaped formation terminates at its mouth in an annular skirt adapted to receive the bearing.

6. The mounting means according to any one of claims 1 to 3 wherein each shield defines a substantially frusto-conical projection adapted to mate with a complementary female formation defined in each end wall of the roller.

7. The mounting means according to claim 6 wherein the frusto-conical projection, terminates at its mouth in an annular skirt adapted to receive the bearing.

8. The mounting means according to any one of claims 1 to 7 wherein the shield is adapted to receive a charge of lubricant for lubricating the bearing.

9. The mounting means according to any one of claims 1 to 8 wherein the shield and mating formations at the ends of the rollers are relatively rotatable.

10. The mounting means according to any one of claims 1 to 8 wherein the shields and/or formations at the ends of the roller are provided with a locking formation preventing relative rotation between the roller ends and the shields.

11. The mounting means according to claim 10 wherein a lug pin protrusion or the like is provided on the shield or roller end and a mating indentation or the like on the roller end or shield as the case may be to prevent relative rotation between these members.

12. The mounting means according to any one of claims 1 to claim 11 wherein a base frame is provided with the supports for the rollers being removably mounted on the base frame in quick release fashion.

13. The mounting means according to claim 14 wherein each support is adapted to be secured to a bearing towards one end thereof while the other end provides an engagement formation adapted to mate with a complementary formation defined by the base frame.

14. The mounting means according to claim 13 wherein the engagement formation on the support is in the form of a tongue which is slidaly receivable in a pocket provided on the base frame.

15. The mounting means accordin to claim 14 wherein the tongue is tapered so that it wedges snuggly in the pocket.

16. The mounting means according to claim 14 or claim 15 wherein the leading end of the tongue extends through the pocket so that force can be applied to such leading end to release the tongue form the pocket.

17. The mounting means according to any one of claims 12 to 16 wherein the base frame is of substantially u-shaped configuration.

18. The mounting means according to any one of claims 12 to 17 wherein at least three rollers are mountable on the base frame one roller being substantially centrally and horizontally disposed with the other two rollers being angled outwardly from the central roller one to each side thereof so that the rollers define a trough-shape for supporting a belt or the like.

19. Mounting means for a roller substantially as herein described with reference to the accompanying drawings.

20. A bearing shield suitable for use with the mounting means claimed in any one of claims 1 to 19 comprising an engagement formation adapted to mate with a complementary formation in the end wall of a roller and an annular skirt which is adapted to receive a bearing therein.

21. The bearing shield according to claim 20 wherein the engegement formation is in the nature of a substantially convex cup-shaped formation and the annular skirt extends from the mouth of the cup shape.

22. The bearing shield according to claim 20 wherein the engagement formation is in the nature of a substantially frusto-conical projection with the annular skirt extending from the mounth of the conical-shape.

23. The bearing shield according to any one of claims 20 to 22 including locking means adapted to prevent relative rotation between shield and roller.

24. The bearing shield according to claim 23 wherein the locking means comprises a protrusion or indentation adapted to mate with a complementary formation in the end wall of the roller.

25. The bearing shield according to any one of claims 20 to 22 wherein the engagement formation renders the shield and roller relatively rotatable.

26. A bearing shield substantially as herein described with reference to the accompanying drawings.

27. A base frame suitable for use with the mounting means claimed in any one of claims 1 to 19 characterized in removably mounting means supports for rollers thereon in quick release fashion.

28. The base frame according to claim 27 wherein the means is in the nature of a plurality of pockets, each adapted to received a tongue of the support slidably therein.

29. The base frame according to claim 27 or claim 28 wherein each pocket is tapered to receive a tapered tongue snuggly therein.

30. The base frame according to claim 28 or claim 29 wherein the leading end of the tongue extends through the pocket.

31. The base frame according to any one of claims 27 to 30 wherein at least three rollers are mountable on the frame one roller being substantially centrally disposed with the other two rollers being angled outwardly from the central roller one to each side thereof so that the rollers define a trough-shape support for a belt or the like.

32. The base frame according to any one of claims 27 to 30 characterized in that it is of substantially u-shaped configuration.

33. A base frame substantially as herein described with reference to the accompanying drawings.

34. A roller adapted to be mounted by means of the mounting means claimed in any one of claims 1 to 19 defining an engagement formation in each end wall thereof the engagement formation being adapted to mate with a complementary formation provided by a bearing shield substantially as claimded in any one of claims 20 to 26.

35. The roller according to claim 34 wherein the engagement formations include locking means adapted to prevent relative rotation between the roller and bearing shield.

36. The roller according to claim 35 wherein the locking means comprises a protrusion or an indentation adapted to mate with a complementary formation on the bearing shield.

37. The roller according to claim 34 wherein the engagement formations render the shields and roller relatively rotatable.

38. A roller substantially as herein described with reference to the accompanying drawings.

Fig.1

Fig.2

0025411

# EUROPEAN SEARCH REPORT

European Patent Office

Application number EP 80 81 0270

## DOCUMENTS CONSIDERED TO BE RELEVANT

| Category | Citation of document with indication, where appropriate, of relevant passages | Relevant to claim |
|---|---|---|
| | FR - A - 1 169 232 (FAMA) <br>   * Page 2, column 1, lines 9-29, figures 1-4,12 * <br><br> --- | 1,4,6,9, 12,13, 17,18, 20-22, 25,27, 31,32, 34,37 |

### CLASSIFICATION OF THE APPLICATION (Int. Cl.3)

B 65 G 39/09
         39/12

### TECHNICAL FIELDS SEARCHED (Int. Cl.3)

B 65 G
F 16 C

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-12-1980 | OSTIJN |

EPO Form 1503.1  06.78